# EUROPEAN PATENT APPLICATION

(11) **EP 1 748 121 A2**
(43) Date of publication of application: **31.01.2007**
(21) Application number: 06076484.2
(22) Date of filing: 26.07.2006
(51) Int. Cl.: E04F 10/06, E06B 9/44, B29C 47/00

(54) **Awning**

(30) Priority: 26.07.2005 NL 1029611
(71) Applicant: V.o.f. Adema Rolluiken en Zonwering, 9051 VA Stiens (NL)
(72) Inventor: Adema, Jan Willem, 9051 VA Stiens (NL)
(74) Representative: Grootscholten, Johannes A.M.

(57) **Abstract**

Awning comprising a hollow fabric roller tube, an awning fabric, an edge of which is fastened to the tube and the opposite edge of which is fastened to a pull beam, wherein the outer ends of the tube are mounted rotatably in roller holders, wherein there is arranged in the fabric roller tube a separate strengthening profile beam which can press along at least the greater part of the length of the tube against at least three points on the periphery of the inner wall of the tube in order to prevent bending of the tube.

## Description

The invention relates to an awning comprising a hollow fabric roller tube, an awning fabric, an edge of which is fastened to the tube and the opposite edge of which is fastened to a pull beam, wherein the outer ends of the tube are mounted rotatably in roller holders.

Awnings of this type are in common use, wherein for instance roller blinds and wall awnings can be distinguished. These are usually made to size. The driving of the fabric roller, which can be by motor or by hand, can herein be placed partially in the cavity of the fabric roller tube.

A frequently occurring problem in such awnings is that when the awning fabric is a wound onto the fabric roller the fabric roller bends to some extent, whereby the awning fabric begins to display one or more folds. In the long run such folds have an adverse effect on both the appearance and the strength of the fabric.

The invention has for its object to provide a simple, inexpensive and efficient manner of solving the above stated problem.

According to the invention there is arranged for this purpose in the fabric roller tube a separate strengthening profile beam which can press along at least the greater part of the length of the tube against at least three points on the periphery of the inner wall of the tube in order to prevent bending of the tube. The profile beam can herein be sawn or cut to a predetermined length depending on the length of the fabric roller tube. Account must be taken here of an optional motor drive for placing in the cavity of the tube and sealing caps which are placed in the outer ends of the tube.

In a first preferred embodiment the profile beam has as seen in cross-section a central core from which there extend radially in at least three directions walls which extend as far as the inner periphery of the fabric roller tube.

In a second preferred embodiment the profile beam has as seen in cross-section a star shape, the points of which extend as far as the inner periphery of the fabric roller tube.

In a third preferred embodiment the profile beam has as seen in cross-section a polygonal form, preferably a triangular form, the corner points of which extend as far as the inner periphery of the fabric roller tube.

The profile beam is preferably manufactured from plastic, more preferably from waste plastic.

The invention also relates to a fabric roller tube for holding an awning fabric, wherein there is arranged in the tube a separate strengthening profile beam which can press along at least the greater part of the length of the tube against at least three points on the periphery of the inner wall of the tube in order to prevent bending of the tube.

The invention further relates to a strengthening profile beam which can press along at least the greater part of the length of a fabric roller tube of an awning against at least three points on the periphery of the inner wall of the tube in order to prevent bending of the tube.

The invention also relates to a method for producing an awning, wherein an edge of an awning fabric is fastened to a hollow fabric roller tube and wherein the opposite edge of the fabric is attached to a pull beam, wherein the outer ends of the tube are mounted rotatably in roller holders, wherein there is arranged in the fabric roller tube a separate strengthening profile beam which can press along at least the greater part of the length of the tube against at least three points on the periphery of the inner wall of the tube in order to prevent bending of the tube.

The profile beam is preferably manufactured by means of extrusion. In a particular embodiment the invention herein also relates to an extrusion die for producing a profile beam, comprising a disc with channel-like openings extending outward from a central opening, wherein the die is further provided with disc-like die parts which are arranged in the outer ends of the channels and which can be displaced therein in order to enable adjustment of the cross-section of the opening of the die, and thereby the cross-section of the profile beam. The cross-section of the opening in the extrusion die is herein adjusted in accordance with the inner diameter of the fabric roller tube.

The invention will be further elucidated on the basis of an exemplary embodiment shown in the figures, wherein:
Figure 1 shows schematically part of an awning according to the invention; and
Figure 2 shows a cross-section of a fabric roller applied in the awning of Figure 1.

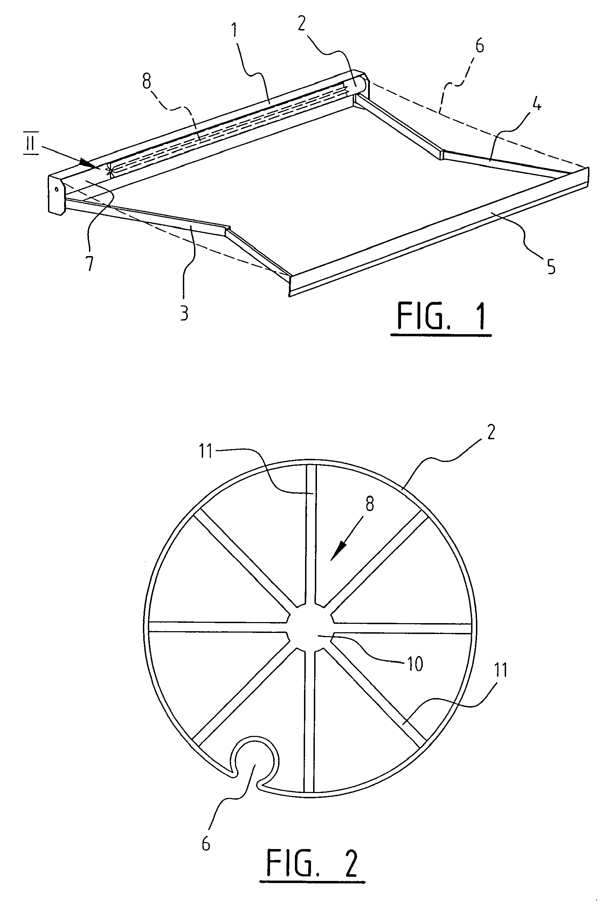

According to figure 1 an awning, which is made to size and can be fixed to an outer wall of a house, comprises an elongate housing 1 having at both outer ends roller holders in which a fabric roller 2 is rotatably mounted. Also mounted on both ends of housing 1 are two pivotable articulated arms 3, 4 which are mounted pivotally at their outer ends on a pull beam 5. An awning fabric is fastened on one side to fabric roller 2 and on the opposite side to pull beam 5. The awning fabric is shown schematically by means of broken lines 6. The awning can be unrolled and rolled up, wherein the articulated arms 3, 4 are respectively extended and folded in, and wherein fabric roller 2 simultaneously rotates so as to respectively unwind the awning fabric 6 from fabric roller 2 and wind it onto fabric roller 2. These mechanical movements can for instance be driven manually by a handle, but there are also embodiments wherein this takes place via a motor. The motor is here partially accommodated in space 7 on an outer end of the fabric roller. The other outer end of fabric roller 2 is closed by a cap so that moisture cannot penetrate. The drive is not shown in the figures. The thus described awning is generally known and therefore requires no further elucidation.

The invention provides for a separate strengthening profile beam 8 to be placed in fabric roller 2. This profile beam 8 prevents fabric roller 2 bending, whereby awning fabric 6 would crease when being wound onto fabric roller 2. Fabric roller 2 with profile beam 8 placed therein is shown in cross-section in Figure 2. Fabric roller 2 is per se known and consists of a hollow metal tube provided with a channel 9 in which the awning fabric can be fastened. Profile beam 8 is manufactured from plastic, for instance recycled plastic. In this exemplary embodiment the profile beam comprises a central axial core 10, from which walls 11 extend in eight radial directions. The outer ends of these walls 11 extend as far as the inner wall of the tube of fabric roller 2 so that they can press thereagainst with reaction force when fabric roller 2 bends.

This exemplary embodiment serves only to illustrate the invention. Many variations are possible in the embodying of the invention as defined by the appended claims.

## Claims

1. Awning, comprising a hollow fabric roller tube (2), an awning fabric (6), an edge of which is fastened to the tube (2) and the opposite edge of which is fastened to a pull beam (5), wherein the outer ends of the tube (2) are mounted rotatably in roller holders, **characterized in that** there is arranged in the fabric roller tube (2) a separate strengthening profile beam (8) which can press along at least the greater part of the length of the tube (2) against at least three points on the periphery of the inner wall of the tube (2) in order to prevent bending of the tube (2).

2. Awning as claimed in claim 1, wherein the profile beam (8) has as seen in cross-section a central core (10) from which there extend radially in at least three directions walls (11) which extend as far as the inner periphery of the fabric roller tube (2).

3. Awning as claimed in claim 1, wherein the profile beam (8) has as seen in cross-section a star shape, the points of which extend as far as the inner periphery of the fabric roller tube (2).

4. Awning as claimed in claim 1, wherein the profile beam (8) has as seen in cross-section a polygonal form, preferably a triangular form, the corner points of which extend as far as the inner periphery of the fabric roller tube (2).

5. Awning as claimed in any of the foregoing claims 1-4, wherein the profile beam (8) is manufactured from plastic.

6. Awning as claimed in any of the foregoing claims 1-5, wherein the awning is a wall awning.

7. Awning as claimed in any of the foregoing claims 1-5, wherein the awning is a roller blind.

8. Fabric roller tube (2) for holding an awning fabric (6), **characterized in that** there is arranged in the tube a separate strengthening profile beam (8) which can press along at least the greater part of the length of the tube (2) against at least three points on the periphery of the inner wall of the tube (2) in order to prevent bending of the tube (2).

9. Strengthening profile beam (8) which can press along at least the greater part of the length of a fabric roller tube (2) of an awning against at least three points on the periphery of the inner wall of the tube (2) in order to prevent bending of the tube (2).

10. Method for producing an awning, wherein an edge of an awning fabric (6) is fastened to a hollow fabric roller tube (2) and wherein the opposite edge of the fabric (6) is attached to a pull beam (5), wherein the outer ends of the tube (2) are mounted rotatably in roller holders, **characterized in that** there is arranged in the fabric roller tube (2) a separate strengthening profile beam (8) which can press along at least the greater part of the length of the tube (2) against at least three points on the periphery of the inner wall of the tube (2) in order to prevent bending of the tube (2).

11. Method as claimed in claim 10, wherein the profile beam (8) is sawn or cut to a predetermined length depending on the length of the sun blind roller tube (2).

12. Method as claimed in claim 10 or 11, wherein the profile beam (8) is manufactured from waste plastic.

13. Method as claimed in claim 10, 11 or 12, wherein the profile beam (8) is manufactured by means of extrusion.

14. Method as claimed in any of the foregoing claims 10-13, wherein the cross-section of the opening in the extrusion die is adjusted in accordance with the inner diameter of the fabric roller tube (2).

15. Extrusion die for producing a profile beam (8) as claimed in claim 2, comprising a disc with channel-like openings extending outward from a central opening, wherein the die is further provided with disc-like die parts which are arranged in the outer ends of the channels and which can be displaced therein in order to enable adjustment of the cross-section of the opening of the die, and thereby the cross-section of the profile beam (8).
